# EUROPÄISCHE PATENTSCHRIFT

(11) **EP 2 266 771 B1**
(45) Veröffentlichungstag und Bekanntmachung des Hinweises auf die Patenterteilung: **18.02.2015**
(21) Anmeldenummer: 10165079.4
(22) Anmeldetag: 07.06.2010
(51) Int. Cl.: B28C 7/00, B65G 53/32, F25D 3/10, B65G 53/52, C04B 40/06

(54) **Vorrichtung und Verfahren zum Kühlen und Eintragen eines riesel- oder pulverförmigen Stoffstroms in einen Lagerbehälter**
Device and method for cooling and inserting a flow of pulverulent or granular materials in a storage container
Dispositif et procédé de refroidissement et d'introduction d'un flux de produits pulvérulents ou granuleux dans un récipient de stockage

(30) Priorität: 23.06.2009 DE 102009029893
(43) Veröffentlichungstag der Anmeldung: 29.12.2010
(73) Patentinhaber: Messer Group GmbH, 65812 Bad Soden (DE); Messer Austria GmbH, 2352 Gumpoldskirchen (AT)
(72) Erfinder: Hatz, Gottfried, 8430, Leibnitz (AT); Tauchmann, Jens, 47259, Duisburg (DE)
(74) Vertreter: Münzel, Joachim R.

(56) Entgegenhaltungen:
- EP-A2- 1 749 629
- EP-A2- 1 749 767
- DE-A1- 10 234 120
- US-A- 3 871 583

## Beschreibung

Die Erfindung betrifft eine Vorrichtung zum Kühlen eines riesel- oder pulverförmigen Stoffstroms, bei der der Stoffstrom über eine einen Vorratstank mit einem Lagerbehälter verbindende Förderleitung zugeführt und an einer in den Lagerbehälter mit einer Düsenöffnung ausmündenden Düse mit einem aus einer Kühlmediumszuführung herangeführten kryogenen Kühlmedium in Kontakt gebracht wird. Die Erfindung betrifft des Weiteren ein entsprechendes Verfahren.

Derartige Vorrichtungen sind bekannt. So ist es beispielsweise bei der Herstellung von Frischbeton nicht selten erforderlich, Zuschlagstoffe, beispielsweise Zement oder Sand, vor der Zumischung zu kühlen, um zu hohe Temperaturen beim Abbinden zu verhindern. Dabei wird der Zuschlagsstoff üblicherweise mit Flüssigstickstoff oder flüssigem Kohlendioxid als Kühlmedium in direkten Kontakt gebracht und dadurch gekühlt.

Aus der DE 36 23 726 A1 ist bekannt, Zement und flüssigen Stickstoff über separate Zuleitungen in einen Lagerbehälter, beispielsweise ein Silo, einzusprühen. Beim Kontakt mit dem Zement verdampft der Stickstoff und wird als Gas mit dem Abluftstrom ausgetragen. Mit diesem Verfahren kann jedoch eine ausreichende Kühlung nicht erzielt werden, da bei der getrennten Zuführung von Zement und Stickstoff ein nur unzureichender Wärmekontakt zwischen beiden Stoffen hergestellt wird. Ein großer Teil des eingesetzten Stickstoffs entweicht damit ungenutzt, und das kalte Stickstoffabgas kann leicht eine Vereisung eines dem Silo zugeordneten Entstaubungsfilters bewirken.

Aus der DE 40 10 045 A1 ist ein Verfahren zur Kühlung eines pulverförmigen Stoffstroms, insbesondere Zement, während dessen pneumatischer Förderung in ein Silo bekannt. Der Stoffstrom wird dabei dem Silo über eine Förderleitung zugeführt, in der eine Venturidüse eingebaut ist. An der Venturidüse mündet eine Kühlmittelzuleitung ein, über die flüssiger Stickstoff in den Stoffstrom eingebracht wird. Als besonders vorteilhaft wird bei diesem Gegenstand angesehen, die Venturidüse bereits am Anfang der Förderleitung vorzusehen, um eine möglichst lange Mischstrecke in der Förderleitung zu gewährleisten. Nachteilig bei diesem Gegenstand ist jedoch, dass es beim Auftreffen des flüssigen Stickstoffs auf die zu kühlende Substanz in der Venturidüse zum Phasenübergang des Stickstoffs und damit zu einer hohen Gasentwicklung an der Kontaktstelle kommt. Dies führt zu einer kurzzeitigen Sperrung des Stoffsstroms in der Förderleitung. Erst nach dem Abbau der Gasblase kann der Feststofftransport wieder aufgenommen werden, wird jedoch sogleich aufgrund der erneuten Verdampfung von Flüssigstickstoff beim Kontakt mit noch warmem zugeführtem Feststoff wieder gestoppt. Dieser Vorgang wiederholt sich laufend und führt in der Folge zu einem stoßweisen Abblasen von Stäuben über die Abluftleitung des Lagersilos. Hierdurch geht Substanz verloren und es kommt zu einer nicht unerheblichen Belastung von Beschäftigten und Umwelt.

In der DE 10 2005 037 081 A1 wird eine Vorrichtung und ein Verfahren zum Kühlen von Zement gemäß dem Oberbegriff der Ansprüche 1 und 8 beschrieben, bei dem ein kryogenes Kühlmedium und der zu kühlende Zement gleichzeitig an einer außenmischenden Zweistoffdüse in das Silo eingetragen werden. Die Zweistoffdüse umfasst konzentrisch zueinander angeordnete Mündungsöffnungen für den Zement und für das Kühlmedium. Durch das Prinzip der Außenmischung wird das zuvor genannte Problem des stoßweisen Abblasens zuverlässig vermieden; Jedoch ist die Durchmischung von Stoff und Kühlmedium und damit die Effizienz der Kühlung noch verbesserungsfähig.

Aufgabe der Erfindung ist daher, eine Möglichkeit zum Eintragen und Kühlen von Stoffströmen, insbesondere zum Eintragen und Kühlen von Zement, anzugeben, die eine effiziente Kühlung ermöglicht und zugleich die Belastung von Mensch und Umwelt reduziert.

Diese Aufgabe wird bei einer Vorrichtung gemäß Anspruch 1 dadurch gelöst, dass die Düse mit einer Mischkammer ausgerüstet ist, in die die Förderleitung mit einem Mündungsabschnitt einmündet, und an der die wenigstens eine Kühlmediumszuführung mit einem Mündungsabschnitt derart in einem spitzen Winkel zur Längsachse der Zuleitung geneigt angeordnet ist, dass ein Kühlmediumsstrom aus der Kühlmediumszuführung mit einer Richtungskomponente in Richtung der Düsenöffnung ausgestoßen wird.

Die Förderleitung und die Kühlmediumszuführung sind somit erst an der Düse miteinander strömungsverbunden, die in das Innere des Lagerbehälters (Silo) einmündet. Beide Stoffströme kommen also erst unmittelbar an der Düse in Wärmekontakt. Die Mischung beginnt im Düseninnern und setzt sich nach dem Austragen der Stoffströme aus der Düse außerhalb der Düse fort. Die Durchmischung beider Stoffströme, und damit auch der Phasenübergang des Kühlmediums, finden also zumindest zu einem wesentlichen Teil erst außerhalb der Düse und damit der Förderleitung statt. Dadurch wird einerseits eine gute Kühlwirkung erzielt, zum anderen werden die aus dem Stand der Technik bekannten, durch einen Phasenübergang des Kühlmediums im Innern der Förderleitung verursachten impulsartigen Störungen beim Stofftransport und damit auch das stoßweise Abblasen von Stäuben vermieden. Gleichwohl kommen die Stoffe so intensiv miteinander in Kontakt, dass eine gute Wärmeübertragung gewährleistet und die Enthalpie des Kühlmediums gut genutzt wird. Durch die spitzwinklige, also mit einer Komponente in Richtung zur Düsenmündung ausgestaltete Strömungsführung des Kühlmediums bildet sich ein den Stoffstrom spiralig umhüllender Kühlmediumsstrom aus, der gemeinsam mit dem Stoffstrom die Düse an der Düsenmündung verlässt. Dadurch wird ein direkter Kontakt des Stoffstroms mit den Wänden der Düse vermieden, der ansonsten abrasiv wirken und die Lebensdauer der Düse vermindern würde. Der Winkel, mit dem die Zuleitungen für das Kühlmedium gegenüber der Längsachse der Förderleitung geneigt sind, bestimmt sich nach den jeweiligen Erfordernissen. Je steiler das Kühlmedium in den Stoffstrom eingetragen wird, desto schneller werden die Stoffe miteinander vermischt, desto geringer ist jedoch die Ausbildung des den Stoffstrom einhüllenden Kühlmediumsstroms. Besonders günstige Ergebnisse werden bei Winkeln zwischen 10° und 45°, besonders bevorzugt 20° und 30° erzielt. Als bevorzugtes kryogenes Kühlmedium kommt flüssiger oder kalter gasförmiger Stickstoff oder flüssiges oder kaltes gasförmiges Kohlendioxid zum Einsatz.

Eine vorteilhafte Weiterbildung der Erfindung sieht vor, dass der Mündungsabschnitt der Förderleitung an ihrem Eintritt in die Mischkammer eine düsenartige Verengung, einen sogenannten Konfusor, aufweist. Der Konfusor verringert den Strömungsquerschnitt des Stoffstroms und erhöht dadurch die Geschwindigkeit des aus der Zweistoffdüse austretenden Strahls, stabilisiert diesen damit und verlängert so die Mischstrecke von Feststoff und Kühlmedium. Zudem führt die hohe Geschwindigkeit des Stoffstroms zu einem Unterdruck in der Mischkammer, dessen Saugwirkung das Eintragen des Kühlmediums in die Mischkammer unterstützt.

Zweckmäßigerweise sind der Mündungsabschnitt der Förderleitung in die Mischkammer und die Düsenöffnung koaxial zueinander angeordnet, wobei der Durchmesser der kreisförmigen Düsenöffnung größer ist als der Durchmesser der gleichfalls kreisförmigen Mündungsöffnung der Förderleitung in die Mischkammer. Die Düsenöffnung ist damit breiter als der im Betrieb der Vorrichtung aus der Mündungsöffnung der Förderleitung austretende Strom des zu kühlenden Stoffes. In den Bereich zwischen Stoffstrom und Düsenöffnung verbleibt somit ein offener Ringraum, der vom umhüllenden Kühlmediumsstrom ausgefüllt wird.

Bevorzugt sind wenigstens zwei Zuleitungen für das Kühlmedium vorgesehen, die in gleichen Winkelabständen mit ihren Mündungsabschnitten in die Mischkammer einmünden. Dadurch gelingt eine besonders effiziente Ausgestaltung des den Stoffstrom spiralförmig umhüllenden Kühlmediumsstroms.

Alternativ oder ergänzend zu der vorgenannten Ausführungsform mehrerer in gleichen Winkelabständen um den Mündungsabschnitt der Förderleitung angeordneter Kühlmediumszuführungen sieht eine vorteilhafte Ausgestaltung der Erfindung vor, dass die Zuleitung für das Kühlmedium als eine mit ihrem Mündungsabschnitt kegelstumpfförmig um den Mündungsabschnitt der Förderleitung angeordnete Ringdüse in die Mischkammer einmündet. Für den Eintragswinkel des über die kegelstumpfartige Zuleitung eingetragenen Kühlmediumsstroms gilt das oben über die bevorzugten Winkelmaße für den Kühlmediumseintrag Gesagte.

Vorteilhafterweise ist die Zuleitung für das Kühlmedium mit einem Sperrventil ausgerüstet, das bei Unterschreiten eines vorgegebenen Druckes selbsttätig schließt. Dadurch wird verhindert, dass beim Abschalten der Einrichtung Bestandteile des Stoffstroms oder der Umgebungsatmosphäre, wie beispielsweise Luftfeuchtigkeit, in die Kühlmediumszuführung, bzw. die Kühlmediumszuführungen, eindringen und dort zu Vereisungen führen kann.

Eine besonders bevorzugte Ausgestaltung der Erfindung sieht vor, dass eine Regeleinrichtung die Volumenströme von zu kühlendem Stoff und Kühlmedium in Abhängigkeit von physikalischen oder chemischen Parametern regelt. Die Regelung erfolgt beispielsweise in Abhängigkeit von der gemessenen Temperatur des zugeführten Stoffes oder der Zieltemperatur des gekühlten Stoffes und/oder von der Staubbeladung eines aus dem Silo abgeführten Abgasstromes. Damit wird der Einsatz an Kühlmedium optimiert, der Feststoffaustrag aus dem Silo minimiert und damit die Belastung von Mensch und Umwelt reduziert.

Die Aufgabe der Erfindung wird auch durch ein Verfahren zum Kühlen eines pulverförmigen Stoffs gemäß Anspruch 8 gelöst, bei dem der Stoffstrom über eine einen Vorratstank mit einem Lagerbehälter verbindende Förderleitung zugeführt und an einer in den Lagerbehälter mit einer Düsenöffnung ausmündenden Düse mit einem kryogenen Kühlmedium in Kontakt gebracht wird, und das erfindungsgemäß dadurch gekennzeichnet ist, dass der Stoffstrom als ein Partikelstrom und das Kühlmedium zumindest teilweise als ein den Partikelstrom umhüllender Kühlmediumsstrom durch die Düsenöffnung ausgetragen wird. Der den Partikelstrahl umhüllende Kühlmediumsstrom verhindert insbesondere abrasive Schädigungen der Düse durch den austretenden Partikelstrom und verlängert damit die Lebensdauer der Düse. Zugleich bewirkt er eine innige Durchmischung von Kühlmedium und Stoffstrom nach dem Austritt aus der Düsenmündung.

Bevorzugt kommt als zu kühlender Stoffstrom ein Baustoff, beispielsweise Zement, und als Kühlmedium flüssiger oder kalter gasförmiger Stickstoff oder flüssiges oder kaltes gasförmiges Kohlendioxid zum Einsatz.

Anhand der Zeichnungen soll ein Ausführungsbeispiel der Erfindung näher erläutert werden. In schematischen Ansichten zeigen:
Fig. 1: Eine erfindungsgemäße Vorrichtung zum Kühlen von Zement und
Fig. 2: Eine in der Vorrichtung nach Fig. 1 eingesetzte Zweistoffdüse zum Eintragen von Zement und Kühlmedium.

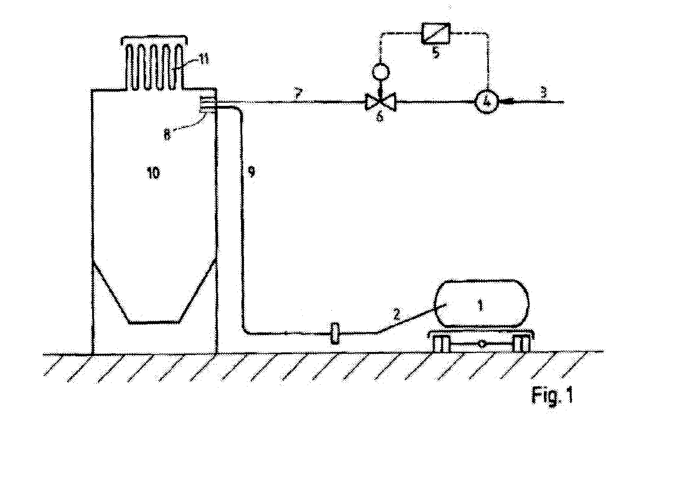

Bei der erfindungsgemäßen Vorrichtung nach Fig. 1 wird ein pulverförmiger Stoff, im Ausführungsbeispiel Zement, aus einem Lieferfahrzeug 1 pneumatisch in ein Silo 10 eingespeist. Am Silokopf ist ein Entstaubungsfilter 11 angeordnet. Die Einspeisung erfolgt vom Lieferfahrzeug 1 über eine Zuleitung 2, die über einen Anschluss mit einer Förderleitung 9 verbunden ist. Die Förderleitung 9 mündet an einer Düse 8 in das Silo 10 ein. Ein Kühlmedium, im Ausführungsbeispiel flüssiger oder kalter gasförmiger Stickstoff, wird über eine Kühlmediumsleitung 3 durch einen Durchflussmesser 4 zu einem Steuerventil 6 geführt, das mittels einer Steuereinheit 5 auf eine bestimmte, fest eingestellte oder in Abhängigkeit von gemessenen Parametern festgelegte Durchflussmenge geregelt wird. Anschließend wird das Kühlmedium über eine Kühlmediumsleitung 7 zur Düse 8 transportiert. Bei den Kühlmediumsleitungen 3, 7 handelt es sich im Falle der Kühlung mit einem tiefkalten kryogenen Medium, wie beispielsweise flüssiger Stickstoff, um wärmeisolierte Leitungen, im Falle eines druckverflüssigten kryogenen Mediums, wie flüssiges Kohlendioxid, um druckfeste Leitungen. Die Steuereinheit 5 steht in hier nicht gezeigter Weise mit einem Sensor zur Erfassung der Temperatur des im Silo 10 gelagerten Zements und/oder einem Sensor zur Erfassung des Feststoffanteils in der dem Entstaubungsfilter 11 zugeführten Abluft in Datenverbindung und ermöglicht so eine in Abhängigkeit von vorgegebenen Werten der Zementtemperatur bzw. des Feststoffanteils geregelte Zuführung des Kühlmediums.

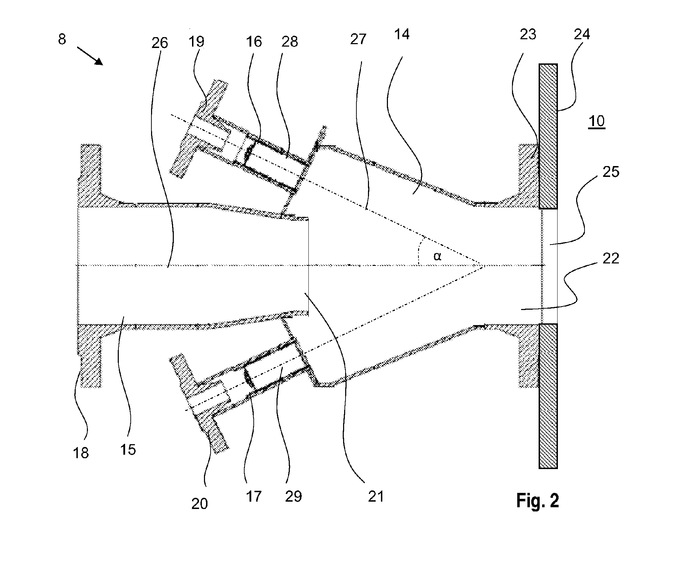

Die in Fig. 2 dargestellte Düse 8 weist eine Mischkammer 14 auf, in die eine Zuleitung 15 für den Stoffstrom sowie zwei Kühlmediumszuführungen 16,17 einmünden. Die Zuleitung 15 für den Stoffstrom verfügt über eine Flanschverbindung 18 zum Anschließen der Förderleitung 9. Die Kühlmediumszuführungen 16, 17 weisen ebenfalls Flansche 19, 20 auf, an denen - hier ebenfalls nicht gezeigt - Zuleitungen befestigbar sind, die mit der Kühlmediumsleitung 7 in Strömungsverbindung stehen. Die im Querschnitt kreisförmige Zuleitung 15 verengt sich an ihrem vorderen Abschnitt, wobei der Durchmesser im Bereich der Mündungsöffnung 21 sein Minimum erreicht.

Der auf diese Weise gebildete Konfusor dient der Erhöhung der Strömungsgeschwindigkeit des durch die Zuleitung 15 geführten Stoffes.

An dem der Zuleitung 15 für den Stoffstrom gegenüberliegenden Abschnitt der Mischkammer 14 weist die Düse 8 einen koaxial zur Zuleitung 15 angeordneten Mündungsabschnitt mit einer Austrittsöffnung 22 auf, deren bevorzugt kreisförmiger Querschnitt einen größeren Durchmesser als die Zuleitung 15 im Bereich ihrer Mündungsöffnung 21 aufweist. Mittels Flanschverbindung 23 ist der Mündungsabschnitt der Düse 8 mit einer Wand 24 des Silos 10 im Bereich einer dort vorgesehenen Zuführungsöffnung 25 fest, aber lösbar verbunden.

Die Kühlmediumszuführungen 16, 17 münden an der Mischkammer 14 jeweils in einem - für beide Zuführungen 16, 17 gleichen - spitzen Winkel in die Zuleitung 15 ein. Der Wert des Winkels α zwischen der Achse 26 der Zuleitung 15 und der Achse 27 der Kühlmediumszuführung 16 besitzt einem Wert zwischen 10° und 45°, bevorzugt zwischen 20 ° und 30°, beispielsweise 22,5°.

Im Innern der Kühlmediumszuführungen 16, 17 sind Rückschlagventile 28, 29 angeordnet, die bei Unterschreiten einer vorgegebenen Druckdifferenz zwischen dem (höheren) Druck in der an den Kühlmediumszuführungen 16, 17 angeschlossenen Kühlmediumsleitung 7 und dem (niedrigeren) Druck im Innern der Mischkammer 14 automatisch schließen. Auf diese Weise wird verhindert, dass nach Beenden der Befüllung des Silos 10 mit Zement Zementteilchen oder Luftfeuchtigkeit in die Kühlmediumszuführungen 16,17 eindringen und diese verstopfen oder vereisen. Beispielsweise handelt es sich bei den Rückschlagventilen 28, 29 um ein Ventil vom Typ, wie er in der DE 10 2006 027 561 A1 beschrieben ist.

Beim Betrieb der Vorrichtung wird ein pulverförmiger Stoff, beispielsweise Zement, aus dem Lieferfahrzeug 1 pneumatisch über die Zuleitung 2 und die Förderleitung 9 zur Düse 8 gefördert und strömt über die Zuleitung 15 in die Mischkammer 14 ein. Nach dem Austritt aus der Mündungsöffnung 21 bildet der Stoffstrom einen sich durch die Mischkammer 14 hindurch erstreckenden und vor der Austrittsöffnung 22 der Düse 8 tief in den Innenraum des Silos 10 hinein eindringenden Partikelstrahl aus. Über die Kühlmediumsleitung 7 gelangt eine über das Steuerventil 6 genau dosierte Menge eines Kühlmediums in die Kühlmediumszuführungen 16, 17 und von dort in die Mischkammer 14 der Düse 8. Aufgrund der spitzwinkligen Anordnung der Kühlmediumszuführungen 16, 17 an der Mischkammer 14 vermischt sich nur ein Teil des einströmenden Kühlmediums noch innerhalb der Mischkammer 14 mit dem zu kühlenden Zement. Der übrige Teil bildet einen den Partikelstrahl umhüllenden Kaltgasstrahl aus. Im Innern des Silos 10 kommen die Stoffströme des pulverförmigen Stoffs und des Kühlmediums weiter in Kontakt. Dabei kühlt sich der pulverförmige Stoff ab, während das Kühlmedium Wärme aufnimmt und - sofern es zuvor im tiefkalt verflüssigten Zustand vorlag - verdampft. Die Zuführung des Kühlmediums über zwei getrennte Kühlmediumszuführungen 16, 17 führt dabei zu einer rotierenden Bewegung des Kühlmediumsstroms um die Längsachse 26 innerhalb der Düse 8 und anschließend zu einer in sich rotierenden Bewegung des Kühlmediumsstrahls im Bereich vor der Austrittsöffnung 22 der Düse 8. Durch diese Rotationsbewegung sowie durch die aufgrund der Querschnittsverjüngung der Zuleitung 15 hervorgerufene Vergrößerung der Strahlgeschwindigkeit werden die Stoffstrahlen stabilisiert und somit die Mischstrecke, innerhalb der der Zement mit dem Kühlmedium in Kontakt steht, verlängert. Auf diese Weise wird eine effiziente und gleichmäßige Wärmeübertragung vom Kühlmedium auf den Stoffstrom gewährleistet.

Anstelle eines verflüssigten kryogenen Kühlmediums können auch kalte gasförmige Kühlmedien zum Einsatz kommen, wie beispielsweise ein Gas, beispielsweise Stickstoff, Argon oder Kohlendioxid, das auf einer Temperatur, die gleich oder wenig mehr als der Siedepunkt bei den entsprechenden Druckverhältnissen in der Kühlmediumszuführung 7 ist, gehalten wird. Ebenso kann Kohlendioxid oder ein sonstiges druckverflüssigtes Gas zum Einsatz kommen, welches im flüssigen Zustand unter Druck zur Zweistoffdüse 8 transportiert und in der Zweistoffdüse 8 oder vor deren Mündung unter Kälteentwicklung entspannt wird. In diesem Fall ist anstelle der wärmeisolierten Leitung 7 eine Druckleitung vorgesehen, die den Transport von flüssigem Kohlendioxid bei Umgebungstemperatur ermöglicht. Weiterhin kann eine Einrichtung zur Drallerzeugung vorgesehen sein, die den Stoffstrom und den diesen umhüllenden Kühlmediumsstrahl stabilisiert und die Strecke der Durchmischung beider Stoffströme verlängert.

Die erfindungsgemäße Vorrichtung ist im Übrigen nicht auf die Kühlung von Zement beschränkt, sondern allgemein zur Kühlung von pulverförmigen oder rieselfähigen Substanzen mit einem kryogenen Kühlmedium einsetzbar.

### Bezugszeichenliste

- 1.: Lieferfahrzeug
- 2.: Zuleitung
- 3.: Leitung
- 4.: Durchflussmesser
- 5.: Steuereinheit
- 6.: Steuerventil
- 7.: Kühlmediumsleitung
- 8.: Zweistoffdüse
- 9.: Förderleitung
- 10.: Silo
- 11.: Entstaubungsfilter
- 12.: -
- 13.: -
- 14.: Mischkammer
- 15.: Zuleitung für den Stoffstrom
- 16.: Kühlmediumszuführung
- 17.: Kühlmediumszuführung
- 18.: Flanschverbindung
- 19.: Flansch
- 20.: Flansch
- 21.: Mündungsöffnung (der Zuleitung 15)
- 22.: Austrittsöffnung
- 23.: Flansch
- 24.: Silowand
- 25.: Zuführungsöffnung
- 26.: Achse
- 27.: Achse
- 28.: Rückschlagventil
- 29.: Rückschlagventil

## Patentansprüche

1. Vorrichtung zum Kühlen eines riesel- oder pulverförmigen Stoffstroms, bei der der Stoffstrom über eine einen Vorratstank (1) mit einem Lagerbehälter (10) verbindende Förderleitung (9, 15) zugeführt und an einer in den Lagerbehälter (10) mit einer Düsenöffnung (22) ausmündenden Düse (8) mit einem aus wenigstens einer Kühlmediumszuführung (7, 16, 17) herangeführten kryogenen Kühlmedium in Kontakt gebracht wird,
**dadurch gekennzeichnet,**
**dass** die Förderleitung (9, 15) und die Kühlmediumszuführung (7, 16, 17) an der Düse (8) miteinander strömungsverbunden sind, wobei die Düse (8) mit einer Mischkammer (14) ausgerüstet ist, in die die Förderleitung (9) mit einem Mündungsabschnitt (15) einmündet, und an der die wenigstens eine Kühlmediumszuführung mit einem Mündungsabschnitt (16, 17) derart in einem spitzen Winkel zur Längsachse (26) der Zuleitung (15) geneigt angeordnet ist, dass ein Kühlmediumsstrom aus der Kühlmediumszuführung (7) mit einer Richtungskomponente in Richtung der Düsenöffnung (22) ausgestoßen wird.

2. Vorrichtung nach Anspruch 1, **dadurch gekennzeichnet, dass** der Mündungsabschnitt (15) der Förderleitung an ihrem Eintritt in die Mischkammer (14) eine düsenartige Verengung aufweist.

3. Vorrichtung nach Anspruch 1 oder 2 **dadurch gekennzeichnet, dass** der Mündungsabschnitt (15) der Förderleitung (9) in die Mischkammer (14) und die Düsenöffnung (22) koaxial zueinander angeordnet sind, wobei der Durchmesser der Düsenöffnung (22) größer ist als der Durchmesser der Mündungsöffnung (21) der Förderleitung in die Mischkammer (14).

4. Vorrichtung nach einem der vorhergehenden Ansprüche, **dadurch gekennzeichnet, dass** wenigstens zwei in gleichen Winkelabständen voneinander beabstandete Kühlmediumszuführungen mit ihren Mündungsabschnitten (16, 17) in die Mischkammer (14) einmünden.

5. Vorrichtung nach einem der vorhergehenden Ansprüche, **dadurch gekennzeichnet, dass** die Kühlmediumszuführung als eine mit ihrem Mündungsabschnitt (16, 17) kegelstumpfförmig um den Mündungsabschnitt (15) der Förderleitung (9) angeordnete Ringdüse in die Mischkammer (14) einmündet.

6. Vorrichtung nach einem der vorhergehenden Ansprüche, **dadurch gekennzeichnet, dass** die Kühlmediumszuführung (7, 16, 17) mit einem Sperrventil ausgerüstet ist, das bei Unterschreiten eines vorgegebenen Druckes selbsttätig schließt.

7. Vorrichtung nach einem der vorhergehenden Ansprüche, **dadurch gekennzeichnet** durch eine Regeleinrichtung, die Volumenströme von Stoffstrom und/oder Kühlmedium in Abhängigkeit von physikalischen oder chemischen Parametern, wie etwa der Temperatur des Stoffstroms vor und/oder nach der Kühlung regelt.

8. Verfahren zum Kühlen eines pulverförmigen Stoffs, bei der der Stoffstrom über eine einen Vorratstank (1) mit einem Lagerbehälter (10) verbindende Förderleitung (9, 15) zugeführt, **dadurch gekennzeichnet, dass** der Stoffstrom an einer in den Lagerbehälter (10) mit einer Düsenöffnung (22) ausmündenden Düse (8) mit einem kryogenen Kühlmedium in einer Mischkammer (14) in Kontakt gebracht wird,
wobei der Stoffstrom als ein Partikelstrom und das Kühlmedium zumindest teilweise als ein den Partikelstrom umhüllender Kühlmediumsstrom durch die Düsenöffnung (22) ausgetragen wird.

9. Verfahren nach Anspruch 8, **dadurch gekennzeichnet, dass** als Stoffstrom ein Baustoff, beispielsweise Zement, und als Kühlmedium flüssiger oder kalter gasförmiger Stickstoff oder flüssiges oder kaltes gasförmiges Kohlendioxid zum Einsatz kommt.

## Claims

1. Device for cooling a pourable or pulverulent substance stream, in which the substrance stream is supplied via a conveying line (9, 15) connecting a stock tank (1) to a storage vessel (10) and, at a nozzle (8) issuing with a nozzle orifice (22) into the storage vessel (10), is brought into contact with a cryogenic cooling medium delivered from at least one cooling-medium supply (7, 16, 17), **characterized in that** the conveying line (9, 15) and the cooling-medium supply (7, 16, 17) are flow-connected to one another at the nozzle (8), wherein the nozzle (8) is equipped with a mixing chamber (14) into which the conveying line (9) issues with a mouth portion (15) and at which the at least one cooling-medium supply is arranged with a mouth portion (16, 17) inclined at an acute angle to the longitudinal axis (26) of the conveying line (15) in such a way that a cooling-medium stream is expelled from the cooling-medium supply (7) with a direction component in the direction of the nozzle orifice (22).

2. Device according to Claim 1, **characterized in that** the mouth portion (15) of the conveying line has at its inlet into the mixing chamber (14) a nozzle-like narrowing.

3. Device according to Claim 1 or 2, **characterized in that** the mouth portion (15) of the conveying line (9) into the mixing chamber (14) and the nozzle orifice (22) are arranged coaxially to one another, the diameter of the nozzle orifice (22) being larger than the diameter of the mouth orifice (21) of the conveying line into the mixing chamber (14).

4. Device according to one of the preceding claims, **characterized in that** at least two cooling-medium supplies spaced apart from one another at equal angular intervals issue with their mouth portions (16, 17) into the mixing chamber (14).

5. Device according to one of the preceding claims, **characterized in that** the cooling-medium supply issues, as an annular nozzle arranged frustoconically with its mouth portion (16, 17) around the mouth portion (15) of the conveying line (9), into the mixing chamber (14).

6. Device according to one of the preceding claims, **characterized in that** the cooling-medium supply (7, 16, 17) is equipped with a stop valve which closes automatically when a stipulated pressure is undershot.

7. Device according to one of the preceding claims, **characterized in that** a regulating arrangement regulates the volume flows of the substance stream and/or of the cooling medium as a function of physical or chemical parameters, such as, for example, the temperature of the substance stream before and/or after cooling.

8. Method for cooling a pulverulent substance, in which the substance stream is supplied via a conveying line (9, 15) connecting a stock tank (1) to a storage vessel (10), **characterized in that**, at a nozzle (8) issuing with a nozzle orifice (22) into the storage vessel (10), the substance stream is brought into contact with a cryogenic cooling medium in a mixing chamber (14), the substance stream being discharged as a particle stream through the nozzle orifice (22) and the cooling medium being discharged at least partially as a cooling-medium stream enveloping the particle steam through the said nozzle orifice (22).

9. Method according to Claim 8, **characterized in that** the substance stream used is a building material, for example cement, and the cooling medium used is liquid or cold gaseous nitrogen or liquid or cold gaseous carbon dioxide.

## Revendications

1. Dispositif pour le refroidissement d'un flux de produits pulvérulents ou granuleux, dans lequel le flux de produits est fourni par une conduite d'alimentation (9, 15) reliant un récipient de stockage (1) à un réservoir d'entreposage (10) et est mis en contact à une buse (8) débouchant avec une ouverture de buse (22) dans le récipient d'entreposage (10) avec un fluide de refroidissement cryogénique apporté par au moins une arrivée de fluide de refroidissement (7, 16, 17), **caractérisé en ce que** la conduite d'alimentation (9, 15) et l'arrivée de fluide de refroidissement (7, 16, 17) sont raccordées l'une à l'autre en écoulement à la buse (8), dans lequel la buse (8) est équipée d'une chambre de mélange (14), dans laquelle la conduite d'alimentation (9) débouche par une partie d'embouchure (15), et à laquelle ladite au moins une arrivée de fluide de refroidissement est disposée avec une partie d'embouchure (16, 17) inclinée d'un angle aigu par rapport à l'axe longitudinal (26) de la conduite (15), de telle manière qu'un flux de fluide de refroidissement soit expulsé hors de l'arrivée de fluide de refroidissement (7) avec une composante directionnelle dans la direction de l'ouverture de buse (22).

2. Dispositif selon la revendication 1, **caractérisé en ce que** la partie d'embouchure (15) de la conduite d'alimentation présente un rétrécissement en forme de buse à son entrée dans la chambre de mélange (14).

3. Dispositif selon la revendication 1 ou 2, **caractérisé en ce que** la partie d'embouchure (15) de la conduite d'alimentation (9) dans la chambre de mélange (14) et l'ouverture de buse (22) sont disposées de façon coaxiale l'une par rapport à l'autre, dans lequel le diamètre de l'ouverture de buse (22) est plus grand que le diamètre de l'ouverture d'embouchure (21) de la conduite d'alimentation dans la chambre de mélange (14).

4. Dispositif selon l'une quelconque des revendications précédentes, **caractérisé en ce qu'**au moins deux arrivées de fluide de refroidissement espacées l'une de l'autre de distances angulaires égales débouchent dans la chambre de mélange (14) avec leurs parties d'embouchure (16, 17).

5. Dispositif selon l'une quelconque des revendications précédentes, **caractérisé en ce que** l'arrivée de fluide de refroidissement débouche dans la chambre de mélange (14) sous la forme d'une buse annulaire disposée avec sa partie d'embouchure (16, 17) en forme de tronc de cône autour de la partie d'embouchure (15) de la conduite d'alimentation (9).

6. Dispositif selon l'une quelconque des revendications précédentes, **caractérisé en ce que** l'arrivée de fluide de refroidissement (7, 16, 17) est équipée d'une soupape d'arrêt, qui se ferme automatiquement lorsque la pression descend en dessous d'une valeur prédéterminée.

7. Dispositif selon l'une quelconque des revendications précédentes, **caractérisé par** un système de régulation, qui régule les flux volumiques de flux de produits et/ou de fluide de refroidissement en fonction de paramètres physiques ou chimiques, comme par exemple la température du flux de produits avant et/ou après le refroidissement.

8. Procédé pour le refroidissement d'un produit pulvérulent, dans lequel le flux de produits est fourni par une conduite d'alimentation (9, 15) reliant un récipient de stockage (1) à un réservoir d'entreposage (10), **caractérisé en ce que** l'on met en contact le flux de produits avec un fluide de refroidissement cryogénique dans une chambre de mélange (14) à une buse (8) débouchant dans le réservoir d'entreposage (10) avec une ouverture de buse (22), dans lequel on extrait à travers l'ouverture de buse (22) le flux de produits sous la forme d'un flux de particules et le fluide de refroidissement au moins partiellement sous la forme d'un flux de fluide de refroidissement enveloppant le flux de particules.

9. Procédé selon la revendication 8, **caractérisé en ce que** l'on utilise comme flux de produits un matériau de construction, par exemple du ciment, et comme fluide de refroidissement de l'azote liquide ou gazeux froid ou du dioxyde de carbone liquide ou gazeux froid.
